# EUROPEAN PATENT APPLICATION

(11) **EP 4 604 263 A1**
(43) Date of publication of application: **20.08.2025**
(21) Application number: 24221601.8
(22) Date of filing: 19.12.2024
(51) Int. Cl.: H01M 10/48, H01M 50/503, H01M 50/569

(54) **TERMINAL BLOCK, TERMINAL BLOCK ASSEMBLY AND BATTERY MODULE**

(30) Priority: 05.02.2024 CN 202420281725 U
(71) Applicant: Eve Energy Storage Co., Ltd., Wuhan, Hubei 430000 (CN)
(72) Inventor: WEN, Yuekai, Wuhan,Hubei, 430000 (CN)
(74) Representative: Herrero & Asociados, S.L.

(57) **Abstract**

A terminal block (11), a terminal block assembly (10) and a battery module (100) are provided. The terminal block (11) includes at least two cell connection bodies (111, 112) and a terminal connection body (113). The at least two cell connection bodies (111, 112) are arranged at intervals, and the cell connection bodies (111, 112) are configured to connect with poles of cells. The terminal connection body (113) is connected between two adjacent cell connection bodies (111, 112). The cell connection body (111, 112) is provided with an accommodating groove (11b), which is configured to accommodate and mount a temperature sensor.

## Description

### TECHNICAL FIELD

The present disclosure relates to the technology field of batteries, and in particular, to a terminal block, a terminal block assembly, and a battery module.

### BACKGROUND

During the use of batteries, temperature monitoring of the batteries is particularly important.

In the related technologies, cells are coupled through a terminal block. One way to monitor the temperature of the cells is to stick temperature sensors onto the terminal block, however, this way will present a risk of detachment of the temperature sensor.

### SUMMARY

The present disclosure provides a terminal block, a terminal block assembly and a battery module, which can improve the stability of temperature sensors, thereby making the temperature sensing function more stable.

In a first aspect, embodiments of the present disclosure provide a terminal block. The terminal block includes at least two cell connection bodies and a terminal connection body. The at least two cell connection bodies are arranged at intervals, and the at least two cell connection bodies are configured to connect with poles of cells. The terminal connection body is connected between two adjacent cell connection bodies. The cell connection body is provided with an accommodating groove, which is configured to accommodate and mount a temperature sensor.

In a second aspect, embodiments of the present disclosure provide a terminal block assembly. The terminal block assembly includes an acquisition terminal, a fastening mechanism, a temperature sensor, and the terminal block as described above. The fastening mechanism is configured to fasten the acquisition terminal to the terminal connection body of the terminal block. The temperature sensor is accommodated and mounted in the accommodating groove provided on the cell connection body of the terminal block.

In a third aspect, embodiments of the present disclosure provide a battery module. The battery module includes at least two cells and the terminal block assembly as described above. A pole of the cell is received in a pole receiving hole of the cell connection body.

The terminal block provided in the present disclosure includes at least two cell connection bodies and a terminal connection body. The at least two cell connection bodies are arranged at intervals, and the at least two cell connection bodies are configured to connect with poles of cells. The terminal connection body is connected between two adjacent cell connection bodies. The cell connection body is provided with an accommodating groove, which is configured to accommodate and mount a temperature sensor. By means of the described method, the temperature sensor is accommodated by forming the accommodating groove on the terminal block, which increases contact surfaces between the temperature sensor and the terminal block, thereby making the temperature sensor more firmly fixed on the terminal block, reducing the possibility of detachment of the temperature sensor, and further making the temperature detection function of the temperature sensor more stable, making the whole cell work more safely.

### BRIEF DESCRIPTION OF THE DRAWINGS

FIG. 1 is a three-dimensional structural schematic diagram of a terminal block assembly according to some embodiments.
FIG. 2 is a three-dimensional structural schematic diagram of a terminal block shown in FIG. 1.
FIG. 3 is a schematic cross-sectional view of the terminal block shown in FIG. 2 in an F-F direction.
FIG. 4 is a schematic assembly diagram of a fastener corresponding to FIG. 3.
FIG. 5 is a schematic top view of the terminal block shown in FIG. 3 in an E direction.
FIG. 6 is a partial enlarged schematic diagram of FIG. 2.
FIG. 7 is a schematic structural diagram of some embodiments of a terminal connection body shown in FIG. 3.
FIG. 8 is a schematic diagram of a battery module according to some embodiments.

Reference numerals in the drawings: 100, battery module; 20, cell; 10, terminal block assembly; 11, terminal block; 12, acquisition terminal; 13, fastening mechanism; 111, first cell connection body; 112, second cell connection body; 113, terminal connection body; A, pole receiving hole; B, terminal mounting hole; 11a, welding groove; 11b, accommodating groove; 131, first fastener; 132, second fastener; 113a, first connection portion; 113b, second connection portion; 113c, third connection portion; M1, top surface; M2, side surface; M3, bottom surface; K1, first opening; K2, second opening; M, end wall; D, bottom; I, first central axis; II, second central axis; O, dimensional center.

### DETAILED DESCRIPTION

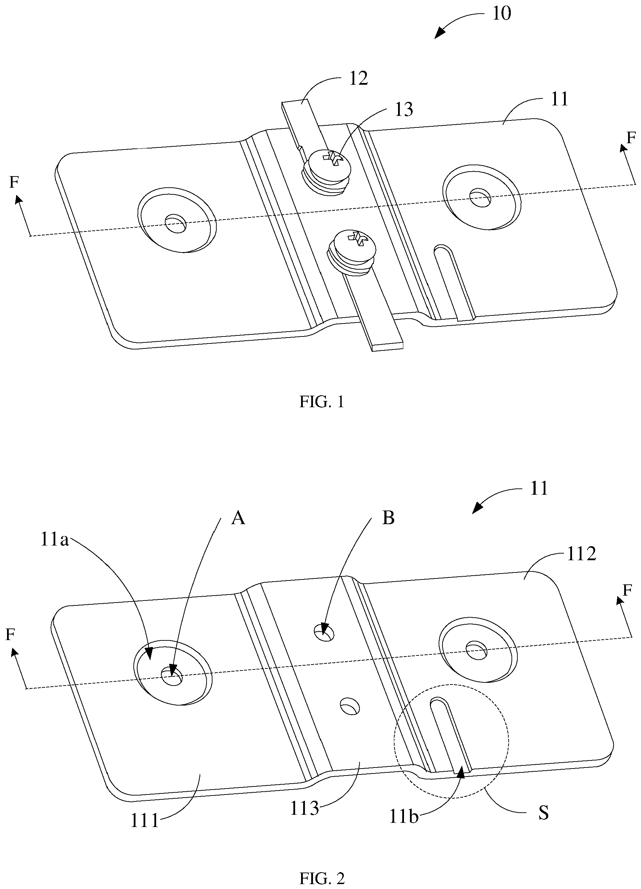

Please referring to FIG. 1, which is a three-dimensional structural schematic diagram of a terminal block assembly 10 according to some embodiments of the present disclosure. The terminal block assembly 10 in this embodiment includes a terminal block 11, an acquisition terminal 12, and a fastening mechanism 13.

Please referring to FIGS. 2, 3 and 4 together, the terminal block 11 includes at least two cell connection bodies and a terminal connection body 113. It should be noted that, in the following embodiments, the example in which the first cell connection body 111 and the second cell connection body 112 are adjacent to each other is taken as an example of the cell connection bodies. In other embodiments, the number of the cell connection bodies may also be three or more, and correspondingly, the number of the terminal connection body 113 may also be more.

The cell connection bodies, such as the first cell connection body 111 and the second cell connection body 112, are arranged at intervals. The cell connection bodies are configured to connect with poles of cells. Specifically, a bottom surface M3 of each of the first cell connection body 111 and the second cell connection body 112 is provided with a pole receiving hole A. The pole receiving hole A of the first cell connection body 111 and the pole receiving hole A of the second cell connection body 112 can respectively receive poles of different cells.

In some embodiments, a top surface M1 of each of the first cell connection body 111 and the second cell connection body 112 away from the pole receiving hole A is provided with a welding groove 11a. The pole receiving hole A is in communication with the welding groove 11a. It can be understood that a pole of a cell passes through the pole receiving hole A, and then extends into the welding groove 11a and is welded in the welding groove 11a.

Further, the terminal connection body 113 is connected between two adjacent cell connection bodies, such as between the first cell connection body 111 and the second cell connection body 112. In some embodiments, the terminal connection body 113 is provided with a terminal mounting hole B for connecting the acquisition terminal 12 to the terminal connection body 113. In this embodiment, the acquisition terminal 12 is provided with a corresponding positioning hole, and the fastening mechanism 13 passes through the positioning hole and the terminal mounting hole B in sequence, to connect the acquisition terminal 12 to the terminal connection body 113, thereby achieving a fixation between the acquisition terminal 12 and the terminal connection body 113. Compared to related technologies, by means of this arrangement manner, the assembly manner between the acquisition terminal 12 and the terminal block 11 is relatively simple.

It can be understood that the acquisition terminal 12 can be used for acquiring current and voltage signals by being electrically coupled to the poles of a plurality of cells via the terminal block 11.

In the present embodiment, the fastening mechanism 13 includes a first fastener 131 and a second fastener 132. The first fastener 131 passes through the positioning hole on the acquisition terminal 12 and the terminal mounting hole B on the terminal connection body 113 in sequence, and then is connected with the second fastener 132, so that the acquisition terminal 12 is pressed onto the terminal connection body 113 through the fastening mechanism 13, allowing the acquisition terminal 12 to fully contact the terminal connection body 113.

The terminal connection body 113 is bent and connected to the first cell connection body 111 and the second cell connection body 112 respectively. Due to the terminal connection body 113 is connected to the first cell connection body 111 and the second cell connection body 112 by a bending connection manner, the terminal connection body 113 has an arch-shaped structure as shown in FIGS. 2, 3 and 4, which can form a space. The second fastener 132 is connected to the first fastener 131 in the space, avoiding a risk of interference between the second fastener 132 and the cell, thereby preventing the cell from being damaged.

It can be understood that, in practical applications, a bolt may be selected as the first fastener 131, a nut may be selected as the second fastener 132, and the first fastener 131 and the second fastener 132 are connected together in a threaded connection manner.

Further, at least one of the first cell connection body 111 and the second cell connection body 112 is provided with an accommodating groove 11b. The accommodating groove 11b is configured to accommodate and mount a temperature sensor. It can be understood that, during use of the cells mounted on the cell connection bodies, the temperature sensor can be used to monitor the temperature of the cells.

The temperature sensor may be a thermistor, which is a sensor resistor whose resistance value changes with temperature, and is divided, according to different temperature coefficients, into positive temperature coefficient thermistor (PTC thermistor) and negative temperature coefficient thermistor (NTC thermistor). The resistance value of the PTC thermistor increases with increasing temperature, while and the resistance value of the NTC thermistor decreases with increasing temperature. Both of the PTC thermistor and the NTC thermistor belong to semiconductor devices.

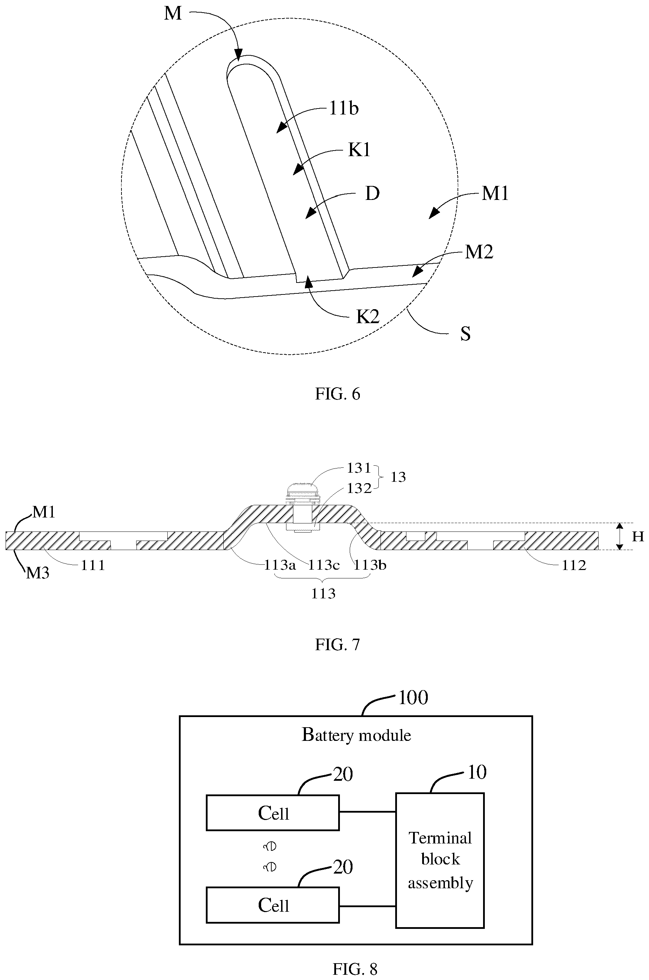

Please further referring to FIG. 6, which is a partial enlarged schematic diagram of FIG. 2. The cell connection body includes the top surface M1 and a side surface M2 adjacent to each other. The accommodating groove 11b is provided with a first opening K1 defined on the top surface M1 and a second opening K2 defined on the side surface M2, with the first opening K1 facing a side away from the cell.

It can be understood that, when the pole of the cell is placed upwards, the first opening K1 faces upwards, and the second opening K2 faces a side edge of the cell connection body. In this way, the temperature sensor may be placed from above or from the side edge.

Two ends of the thermistor are generally arc-shaped. Therefore, in some embodiments, the accommodating groove 11b is provided with a bottom D facing the first opening K1 and an end wall M facing the second opening K2, where the end wall M has an arc-shaped surface. In this way, it is convenient to adapt the thermistor to the convenient groove 11b.

It can be understood that in related technologies, one way is to plug terminals of an acquisition harness into a cell terminal block, and then acquire data such as voltage, current, and temperature of the cell through the acquisition harness. Such a plug-in structure complicates the assembly of the terminals in the acquisition harness and the cell terminal block. Another way is to directly stick the temperature sensor onto the terminal block, which presents a risk of attach of the temperature sensor. However, in this embodiment, when the thermistor is mounted in the accommodating groove 11b, the thermistor may be adhered to the accommodating groove 11b by using a dispensing process. In this way, the contact surfaces between the thermistor and the inner wall of the accommodating groove 11b are the bottom D, the end wall M, and a left side wall and a right side wall adjacent to the end wall M, totaling four surfaces. Compared to sticking the thermistor onto a flat surface, adding more adhesive surfaces means that the thermistor can be more firmly fixed to the terminal block 11, thereby reducing the possibility of detachment, so that the thermistor can acquire the temperature of the cell through the terminal block 11.

The terminal block 11 provided in the embodiment includes at least two cell connection bodies and a terminal connection body. The at least two cell connection bodies are arranged at intervals, and the at least two cell connection bodies are configured to connect with poles of cells. The terminal connection body is connected between two adjacent cell connection bodies. The cell connection body is provided with an accommodating groove, which is configured to accommodate and mount a temperature sensor. By means of the described method, the temperature sensor is accommodated by forming the accommodating groove on the terminal block, which increases contact surfaces between the temperature sensor and the terminal block, thereby making the temperature sensor more firmly fixed on the terminal block, reducing the possibility of detachment of the temperature sensor, and further making the temperature detection function of the temperature sensor more stable, making the whole cell work more safely.

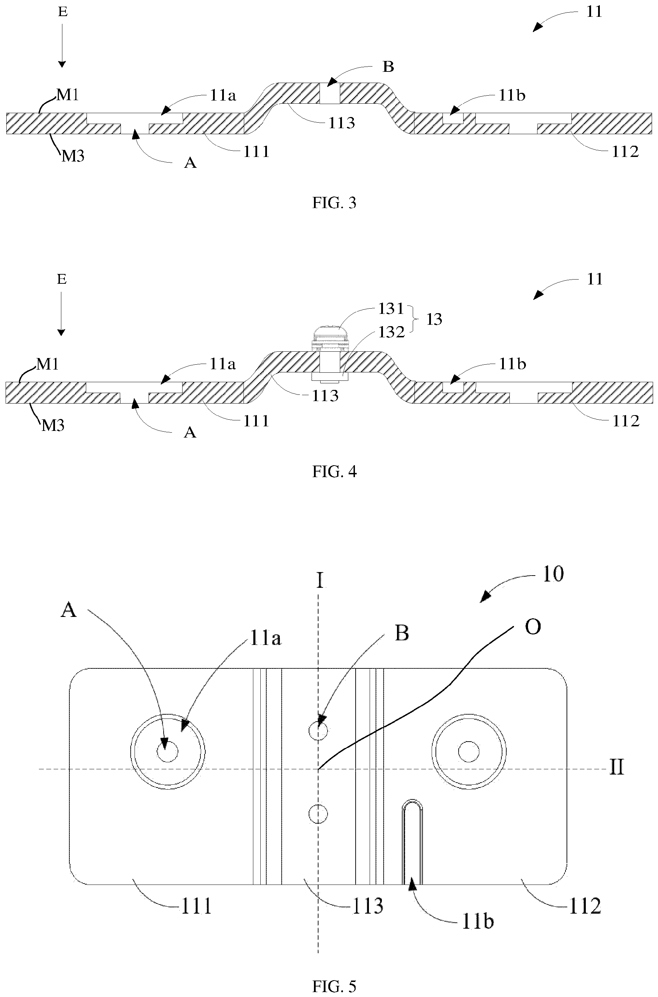

Referring to FIG. 5, in some embodiments, two pole receiving holes A on two adjacent cell connection bodies are symmetrical with respect to the terminal connection body 113 connected between the two adjacent cell connection bodies. For example, a first central axis I extending in a direction along two ends of the terminal connection body 113 and passing through a dimensional center O of the terminal connection body 113 is defined. The pole receiving hole A on the first cell connection body 111 and the pole receiving hole A on the second cell connection body 112 are respectively provided at both sides of the first central axis I, and are symmetrical with respect to the first central axis I. It can be understood that the first central axis I is merely a virtual line defined for ease of description.

Continuing to refer to FIG. 5, the number of the terminal mounting holes B provided on the terminal connection body 113 is two (for example, a first sub-mounting hole and a second sub-mounting hole). The two terminal mounting holes B are arranged along a direction of two ends of the terminal connection body 113, and are symmetrical with respect to the two ends of the terminal connection body 113. For example, a second central axis II perpendicular to the first central axis I and passing through the dimensional center O of the terminal connection body 113 is defined. The two terminal mounting holes B are respectively provided at both sides of the second central axis II, and are symmetrical with respect to the second central axis II. It can be understood that the second central axis II is merely a virtual line defined for ease of description. In practical applications, due to the fact that the structures of different cells are the same, the structures of the first cell connection body 111 and the second cell connection body 112 are usually the same. In this case, it is easy to have the terminal block 11 mounted upside down. Although the first cell connection body 111 and the second cell connection body 112 are not affected by this situation, the installation position of the acquisition terminal 12 is affected. For example, when there is only one terminal mounting hole B, if the terminal block 11 is installed upside down, the position of the terminal mounting hole B will change. At this time, when the acquisition terminal 12 is mounted in the terminal mounting hole B, it is necessary to rearrange connection lines of the acquisition terminal 12, and interference of the acquisition terminal 12 to other structures inside a battery module may also occur. However, in this embodiment, two terminal mounting holes B are provided in the above manner, even if the terminal block 11 is installed upside down, the installation position of the acquisition terminal 12 will not be affected, and a fool proof effect is achieved.

In some embodiments, referring to FIG. 7, which is a schematic structural diagram of some embodiments of a terminal connection body 113 shown in FIG. 3. The terminal connection body 113 includes a first connection portion 113a, a second connection portion 113b, and a third connection portion 113c. The third connection portion 113c is connected between the first connection portion 113a and the second connection portion 113b. In this embodiment, the first connection portion 113a and the second connection portion 113b bend and extend outward from two opposite sides of the third connection portion 113c, respectively, to form the terminal connection body 113 as an arch-shaped structure. The first connection portion 113a is further connected to the first cell connection body 111. The second connection portion 113b is further connected to the second cell connection body 112. The terminal mounting hole B is provided on the third connection portion 113c.

A distance H between the bottom surface M3 of the cell connection body (the first cell connection body 111 or the second cell connection body 112) and a bottom surface of the third connection portion 113c is greater than or equal to 3 mm, and less than or equal to 4 mm. On the one hand, it is ensured that the fastening mechanism 13 (such as the second fastening mechanism 132) has enough installation space to mount the acquisition terminal 12, and on the other hand, the case that the structural strength of the terminal block 11 becomes lower due to an excessively large distance is prevented.

In other embodiments, the terminal connection body 113 may also be formed as a whole having an arc-shape structure. In addition, the first cell connection body 111, the terminal connection body 113 and the second cell connection body 112 may be integrally formed.

Referring to FIG. 8, embodiments of the present disclosure further provide a battery module 100, which includes a plurality of cells 20 and the terminal block assembly 10 described in the foregoing embodiments. Taking a first cell and a second cell as an example, a pole of the first cell is received in the pole receiving hole A on the first cell connection body 111, and a pole of the second cell is received in the pole receiving hole A on the second cell connection body 112.

## Claims

1. A terminal block (11), comprising:
at least two cell connection bodies (111, 112) arranged at intervals; wherein the cell connection bodies (111, 112) are configured to connect with poles of cells; and
a terminal connection body (113) connected between two adjacent cell connection bodies (111, 112);
wherein at least one of the cell connection bodies (111, 112) is provided with an accommodating groove (11b); wherein the accommodating groove (11b) is configured to accommodate and mount a temperature sensor.

2. The terminal block (11) according to claim 1, wherein the cell connection body (111, 112) comprises a top surface (M1) and a side surface (M2) adjacent to each other; the accommodating groove (11b) is provided with a first opening (K1) defined on the top surface (M1) and a second opening (K2) defined on the side surface (M2).

3. The terminal block (11) according to claim 2, wherein the accommodating groove (11b) is provided with a bottom (D) facing the first opening (K1) and an end wall (M) facing the second opening (K2); wherein the end wall (M) has an arc-shaped surface.

4. The terminal block (11) according to any one of claims 1 to 3, wherein a bottom surface (M3) of the cell connection body (111, 112) is provided with a pole receiving hole (A) for receiving the pole of the cell.

5. The terminal block (11) according to claim 4, wherein a top surface (M1) of the cell connection body (111, 112) away from the pole receiving hole (A) is provided with a welding groove (11a); wherein the pole receiving hole (A) is in communication with the welding groove (11a); the welding groove (11a) is configured to weld with the pole of the cell that extends into the welding groove (11a) after passing through the pole receiving hole (A).

6. The terminal block (11) according to claim 5, wherein the accommodating groove (11b) and the welding groove (11a) are both provided on the top surface (M1) of the cell connection body (111, 112).

7. The terminal block (11) according to claim 4, wherein two pole receiving holes (A) on two adjacent cell connection bodies (111, 112) are symmetrical with respect to the the terminal connection body (113) connected between the two adjacent cell connection bodies (111, 112).

8. The terminal block (11) according to any one of claims 1 to 3, wherein the terminal connection body (113) is provided with terminal mounting holes (B); wherein the terminal mounting hole (B) is configured to connect an acquisition terminal (12) to the terminal connection body (113).

9. The terminal block (11) according to claim 8, wherein the terminal connection body (113) comprises a first connection portion (113a), a second connection portion (113b), and a third connection portion (113c); wherein the first connection portion (113a) and the second connection portion (113b) bend and extend outward from two opposite sides of the third connection portion (113c), respectively, to form the terminal connection body (113) as an arch-shaped structure; the first connection portion (113a) and the second connection portion (113b) are respectively connected to the two adjacent cell connection bodies (111, 112); wherein the terminal mounting hole (B) is provided on the third connection portion (113c).

10. The terminal block (11) according to claim 9, wherein the terminal mounting hole (B) provided on the terminal connection body (113) comprises a first sub-mounting hole and a second sub-mounting hole; wherein the first sub-mounting hole and the second sub-mounting hole are respectively arranged along a direction of two ends of the terminal connection body (113), and are symmetrical with respect to the two ends of the terminal connection body (113).

11. The terminal block (11) according to claim 9, wherein a distance between a bottom surface (M3) of the cell connection body (111, 112) and a bottom surface of the third connection portion (113c) is greater than or equal to 3 mm and less than or equal to 4 mm.

12. A terminal block assembly (10), comprising an acquisition terminal (12), a fastening mechanism (13), a temperature sensor, and the terminal block (11) according to any one of claims 1 to 11, wherein the fastening mechanism (13) is configured to fasten the acquisition terminal (12) to the terminal connection body (113) of the terminal block (11); the temperature sensor is accommodated and mounted in the accommodating groove (11b) provided on the cell connection body (111, 112) of the terminal block (11).

13. A battery module (100) comprising at least two cells (20) and the terminal block assembly (10) according to claim 12, wherein a pole of the cell (20) is received in a pole receiving hole (A) provided on the cell connection body (111, 112).
